# EUROPEAN PATENT APPLICATION

(11) **EP 2 525 551 A2**
(43) Date of publication of application: **21.11.2012**
(21) Application number: 12167770.2
(22) Date of filing: 11.05.2012
(51) Int. Cl.: H04L 29/08

(54) **System, Method, and Device for Machine**

(30) Priority: 18.05.2011 US 201113110859
(71) Applicant: GENERAL ELECTRIC COMPANY, Schenectady, NY 12345 (US)
(72) Inventor: Alley, Daniel Milton, Salem, VA Virginia 24153 (US); Boettner, Fred Henry, Salem, VA Virginia 24153 (US); Moore, Christopher Todd, Salem, VA Virginia 24153 (US)
(74) Representative: Picker, Madeline Margaret

(57) **Abstract**

Embodiments of the invention provide systems, methods, and devices for controlling a machine (40). In one embodiment, the invention provides a system for a machine (40), the system comprising: a device including: a module (20, 22, 32, 34, 36) adapted to perform a support function associated with a machine (40); and a power cable (200) for connecting the module (20, 22, 32, 34, 36) to an electrical supply, the power cable (200) including an identifier (250, 252) operable to be read by the device; and a host computer (10) operable to: receive from the device a request for a network identifier for the device, the request including information from the identifier (250, 252); and obtain the network identifier using the information from the identifier (250, 252).

## Description

### BACKGROUND OF THE INVENTION

Many machines are amenable to or require control of their operation by a control system. Such control systems may monitor or directly control various operating parameters or conditions in order to improve the efficiency of the machine. The more complex the machine, the greater the number of parameters or conditions involved and the more complex their interactions and interdependence.

For example, the operation of turbines, including gas and steam turbines, typically includes the use of a control system for monitoring and/or controlling such things as rotational speed, fuel delivery rate(s), combustion temperature, exhaust temperature, vibration, etc. Monitoring and/or controlling such parameters or conditions typically requires the use of a plurality of apparatuses, devices, or systems, each of which is connected to a network, which often includes a central or host computer for receiving and processing data from the various apparatuses, devices, or systems. In some cases, operation of the machine may be monitored and/or controlled by a remotely-located host computer.

In such systems, where apparatuses, devices, or systems are part of a network for monitoring and/or controlling a machine, the failure of any particular apparatus, device, or machine must be remedied as quickly and efficiently as possible in order to minimize downtime or unmonitored/uncontrolled operation of the machine. As such, many apparatuses, devices, or systems in such control systems are designed with redundancy in mind, such that a failed device may be quickly replaced by a new device capable of performing the same functions.

Properly identifying and configuring such replacement devices within the control system is often difficult and time-consuming, however. For example, some devices may require manual configuration by personnel knowledgeable of their functions and operation.

Other devices may be configurable by the control system but require that they be properly identified on the control system network before they can be so configured. Where devices include or are connected to an identifier for the device, proper identification of a new device may require entry of its identifier into the network or that the identifier of a failed device be inserted into or connected to the new device.

### BRIEF DESCRIPTION OF THE INVENTION

Embodiments of the invention provide systems, methods, and devices for a machine.

In one embodiment, the invention provides a system for a machine, the system comprising: a device including: a module adapted to perform a support function associated with a machine; and a power cable for connecting the module to an electrical supply, the power cable including an identifier operable to be read by the device; and a host computer operable to: receive from the device a request for a network identifier for the device, the request including information from the identifier; and obtain the network identifier using the information from the identifier.

In another embodiment, the invention provides a power cable for powering an apparatus, the power cable comprising: an electrically conductive material between and connected to each of a first end and a second end thereof; and an identifier connected to the electrically conductive material, wherein the identifier is adapted to be read by the apparatus and information from the identifier used to generate a network identifier for the apparatus.

In yet another embodiment, the invention provides a method of identifying an apparatus in a system for controlling a machine, the method comprising: connecting the apparatus to a power cable; connecting the power cable to an electrical supply; reading an identifier within the power cable; and requesting from a host computer a network identifier for the apparatus based on the identifier.

In still another embodiment, the invention provides a device for use in a system for controlling a machine, the device comprising: an apparatus adapted to perform at least one function selected from a group consisting of: monitoring the machine, controlling the machine, monitoring at least one condition under which the machine operates, and controlling at least one condition under which the machine operates; and a power cable for connecting the apparatus to an electrical supply, the power cable including an identifier operable to be read by the device, whereby the identifier, once ready by the device, is used to generate a network identifier for the device.

### BRIEF DESCRIPTION OF THE DRAWINGS

These and other features of this invention will be more readily understood from the following detailed description of the various aspects of the invention taken in conjunction with the accompanying drawings that depict various embodiments of the invention, in which:
FIG. 1 shows a schematic of a control system according to an embodiment of the invention.
FIG. 2 shows a power cable according to an embodiment of the invention.
FIG. 3 shows a first end of a power cable according to another embodiment of the invention.
FIG. 4 shows an external device for connection to an electrical supply and a power cable, according to another embodiment of the invention.
FIG. 5 shows the external device of FIG. 4 connected to the first end of the power cable of FIG. 3.
FIG. 6 shows a flow diagram of a method according to an embodiment of the invention.

It is noted that the drawings of the invention are not to scale. The drawings are intended to depict only typical aspects of the invention, and therefore should not be considered as limiting the scope of the invention. In the drawings, like numbering represents like elements among the drawings.

### DETAILED DESCRIPTION OF EMBODIMENTS OF THE INVENTION

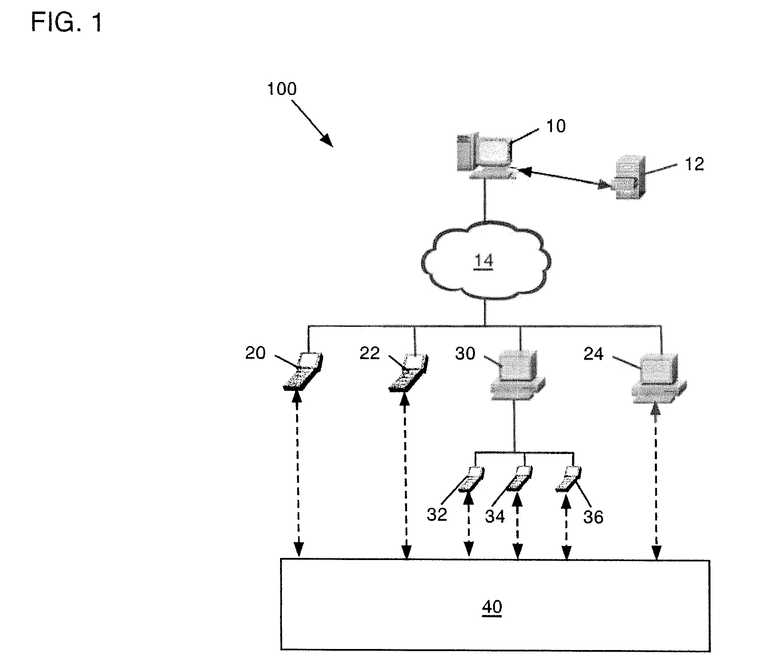

Turning now to the drawings, FIG. 1 shows a control system 100 according to an embodiment of the invention. Control system 100 includes a host computer 10 connected to a network 14. Host computer 10 may be any general purpose computing device programmed or operable to receive data from and/or provide data to other devices connected to network 14. As will be apparent to one skilled in the art, network 14 may include any number of devices or systems operable to permit communication between or among a plurality of computers or other electronic devices, including, for example, a 100 MB Ethernet network employing an Ethernet Global Data (EGD) or other communication protocol. Network 14 may also include, for example, a wireless network.

A pair of apparatuses or modules 20, 22 are also connected to network 14 and perform one or more support functions of machine 40, such as monitoring and/or controlling one or more parameters or conditions of machine 40. A pair of control computers 24, 30 are also connected to network 14. Similar to modules 20, 22, control computer 24 performs one or more support of machine 40. Control computer 30, on the other hand, is connected to or in communication with a plurality of modules 32, 34, 36, which perform support functions of machine 40 and deliver data to and receive data from control computer 30.

Host computer 10 is also connected to or in communication with a configuration database 12 including configuration data for modules 20, 22, 32, 34, 36 and control computers 24, 30. As will be explained below, upon connecting a module to network 14, configuration data contained within configuration database 12 may be delivered to the module, such that a replacement module may be automatically configured upon being identified.

The arrangement in control system 100 of host computer 10, configuration database 12, modules 20, 22, 32, 34, 36, and host computers 24, 30 and their connections to network 14 shown in FIG. 1 is merely for the purpose of description. One skilled in the art will recognize that other arrangements of such elements are possible and/or necessary, depending, for example, on the machine to be controlled. One skilled in the art will similarly recognize that control system 100 may include additional or different elements.

As noted above, modules 20, 22, 32, 34, 36 and control computers 24, 30 may be employed to monitor and/or control one or more parameter or condition of machine 40, including operational parameters and conditions. In the case that machine 40 includes a gas turbine, such parameters and conditions may include, for example, rotational speed, fuel delivery rate(s), combustion temperature, exhaust temperature, and vibration. Other parameters and conditions will, of course, be apparent to one skilled in the art and are within the scope of the various embodiments of the invention.

In order to monitor and/or control such parameters and conditions, modules 20, 22, 32, 34, 36 and control computers 24, 30 may include any number of devices, including, for example, sensing devices, thermocouples, resistance temperature detectors, scanning devices, servo devices, current sensors, speed sensors, valve actuators, air flow regulators, positioners, flame detectors, gas flow meters, and fuel ignition devices.

Machines other than a turbine may similarly be monitored and/or controlled. Such machines include, for example, a distributed control system, a distributed control device, and a network-controlled array of devices. These systems and devices may comprise stand-alone systems and devices or may include the systems and devices employed in operating another machine, such as a turbine.

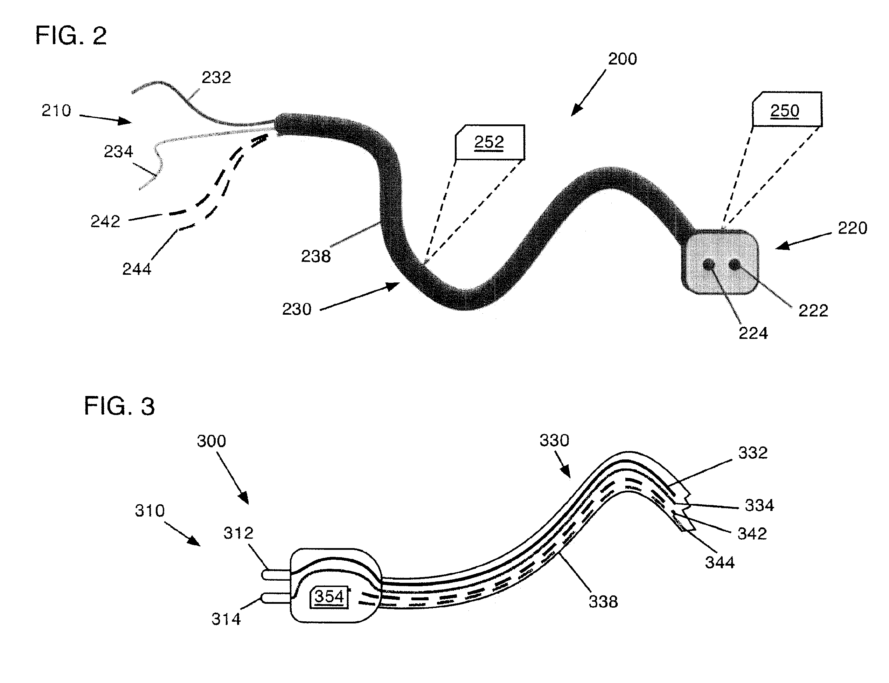

In order to more efficiently add a module to network 14, particularly where the module is being added to replace a failed module, embodiments of the invention include the incorporation of an identifier for the module in a power cable used to connect the module to an electrical supply. For example, FIG. 2 shows a power cable 200 capable of delivering electrical power from an electrical supply to a module. Power cable 200 includes a first end 210 for connection to an electrical supply, a second end 220 for connection to a module, and an electrically conductive material 230, such as a wire, between first end 210 and second end 220.

As shown in FIG. 2, electrically conductive material 230 includes a first positive wire 232 and a first negative wire 234 for powering the module to which power cable 200 will be connected. First positive wire 232 and first negative wire 234 terminate at positive receptacle 222 and negative receptacle 224, respectively, in second end 220.

Electrically conductive material 230 may further include a second positive wire 242 and a second negative wire 244 for powering an identifier 250, 252 within power cable 200. First positive wire 232, first negative wire 234, second positive wire 242, and second negative wire 244 are surrounded by a conventional insulating material 238.

One skilled in the art will recognize that additional components may be provided within or connected to power cable 200. For example, devices may be included to alter the current and/or voltage supplied to identifier 250, 252 and/or the module to which power cable 200 will be connected, depending, for example, on the particular power requirements of each.

The wiring scheme shown in FIG. 2 is a direct current (DC) scheme provided merely for purposes of illustration. Although not shown, one skilled in the art will recognize that a separate grounding connection may be provided, for example, to the apparatus to which power cable 200 will be connected. Other wiring schemes, such as alternating current (AC) wiring schemes are possible, of course, and are within the scope of the various embodiments of the invention.

In FIG. 2, identifier 250, 252 may be included in either or both of second end 220 or insulating material 238. Identifier 250, 252 may include any number of devices for identifying an apparatus within network 14. Suitable devices for use as or within identifier 250, 252 include, but are not limited to, read-only memory (ROM), electrically-programmable read-only memory (EPROM), electrically-erasable-programmable read-only memory (EEPROM), non-volatile random access memory (NVRAM), other non-volatile memory devices that, once programmed, retain identification information when disconnected or unpowered, and radio frequency identification (RFID) tags. Identifier 250, 252 may also include a near field communication (NFC) device. In such embodiments, identifier 250, 252 may include a passive NFC target device capable of being powered by a nearby NFC initiator, such as an NFC initiator housed within a module to which power cable 200 is connected. Other known and later-developed devices are and will be apparent to one skilled in the art and are within the scope of the various embodiments of the invention.

FIG. 3 shows a portion of a power cable 300 according to another embodiment of the invention in which a first end 310 includes a plug for connecting power cable 300 to an electrical supply. In this embodiment, first positive wire 332 and first negative wire 234 terminate at positive post 312 and negative post 314, respectively. In such an embodiment, identifier 354, connected to and powered via second positive wire 342 and second negative wire 344, may be included in first end 310, similarly to its potential inclusion in second end 220 in FIG. 2.

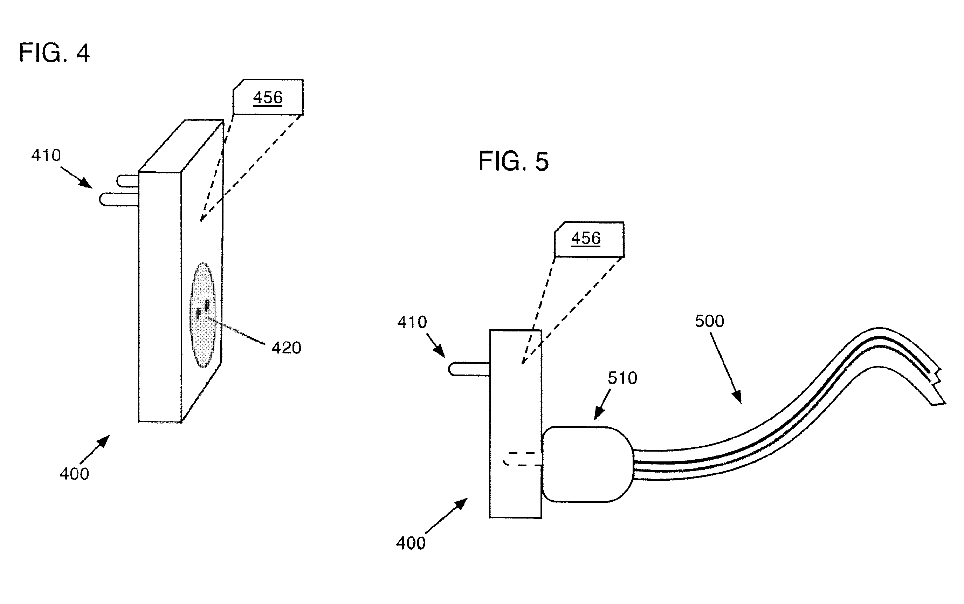

FIGS. 4 and 5 show yet another embodiment of the invention, wherein identifier 456 is included in an external device 400, such as an adapter, surge protector, or similar device to which a power cable 500 may be connected. In such an embodiment, power cable 500 itself need not include an identifier. External device 400 may include a first end 410 for connection to an electrical supply and a second end 420 to which first end 510 of power cable 500 may be connected. Again, the particular wiring connections shown for first end 410 and second end 420 are merely for purposes of illustration and description. Other connections are possible, as will be recognized by one skilled in the art.

According to embodiments of the invention, where an identifier 250, 252, 354, 456 is included in power cable 200, 300 or external device 400, respectively, a failed module to which power cable 200, 300 is connected may be replaced with a new module. Upon connection of the new module to the electrical supply, the new module reads identifier 250, 252, 354, 456 and requests from host computer 10 (FIG. 1) a network identifier for identifying the new module on network 14 (FIG. 1). Identifier 250, 252, 354, 456 may be "read" by the new module using any number of known or later developed methods or technologies, which will vary, of course, based on the technologies employed in identifier 250, 252, 354, 456. For example, in the case that identifier 250, 252, 354, 456 includes an RFID tag, identifier 250, 252, 354, 456 may be read using an RFID reader. In other cases, identifier 250, 252, 354, 456 may be read using second positive wire 342 and second negative wire 344, to which both identifier 250, 252, 354, 456 and the new apparatus would be electrically.

Because identifier 250, 252, 354, 456 is the same for both the failed module and the new module, host computer 10 may deliver to the new module the same network identifier used to identify the failed module. In such case, where control system 100 (FIG. 1) is operable to configure the new module within network 14, host computer 10 may also retrieve from configuration database 12 configuration data for the new module. Configuration data may include, for example, monitoring or control parameters within which the new apparatus will operate in monitoring or controlling machine 40. As with the network identifier, where both the failed module and the new module use the same identifier 250, 252, 354, 456, the configuration data may be the same for the new apparatus and the failed module, whether retrieved from configuration database 12 or newly generated.

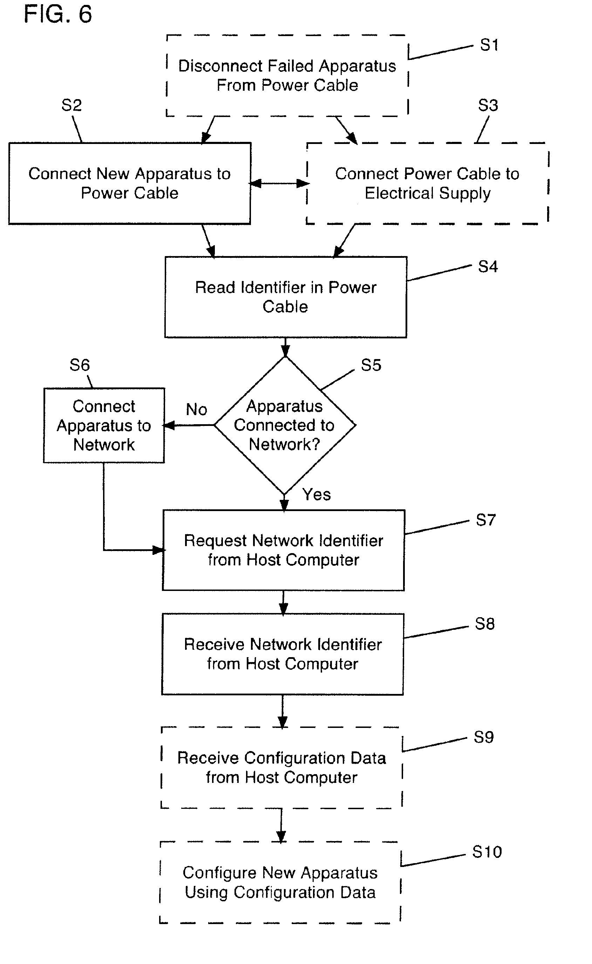

FIG. 6 shows a flow diagram of a method according to an embodiment of the invention. At S1, a failed apparatus is optionally disconnected from second end 220 (FIG. 5) of power cable 200. At S2, a new apparatus is connected to second end 220 of power cable 200 and at S3, first end 210 of power cable 200 is optionally connected to an electrical supply. S2 and S3 may be performed in reverse order. In some embodiments, power cable 200 may remain connected to the electrical supply, obviating S3.

At S4, an identifier 250, 252, 354, 456 within power cable 200 or to which power cable 200 is connected is read by the new apparatus. That is, information stored within identifier 250, 252, 354, 456 is accessed and/or retrieved by the new apparatus. As noted above, the particular method or mechanism by which identifier 250, 252, 354, 456 is read by the new apparatus will depend, in part, on the features of identifier 250, 252, 354, 456. In some embodiments, identifier 250, 252, 354, 456 may be read automatically upon connection of power cable 200 to both the new apparatus and the electrical supply.

At S5, it is determined whether the new apparatus is connected to network 14. If not (i.e., No at S5), the new apparatus is connected to network 14 at S6 and a network identifier based on identifier 250, 252, 354, 456 is requested from host computer 10 at S7. If the new apparatus is already connected to network 14 (i.e., Yes at S5), the request for the network identifier is made at S7.

At S8, the network identifier requested at S7 is received by the new apparatus. Optionally, configuration data may be received by the new apparatus from host computer 10 at S9 and the new apparatus may be configured using the configuration data at S 10.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any related or incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system for a machine (40), the system comprising:
a device including:
a module (20, 22, 32, 34, 36) adapted to perform a support function associated with a machine (40); and
a power cable (200) for connecting the module (20, 22, 32, 34, 36) to an electrical supply, the power cable (200) including an identifier (250, 252) operable to be read by the device; and
a host computer (10) operable to:
receive from the device a request for a network identifier for the device, the request including information from the identifier (250, 252); and
obtain the network identifier using the information from the identifier (250, 252).

2. The system of claim 1, wherein the identifier (250, 252) includes at least one of the following: a read-only memory (ROM), an electrically-programmable read-only memory (EPROM), an electrically-erasable-programmable read-only memory (EEPROM), a non-volatile random access memory (NVRAM), a non-volatile memory device that, once programmed, retains identification information when disconnected or unpowered, or a radio frequency identification (RFID) tag.

3. The system of claim 1 or claim 2, wherein the identifier (250, 252) is located within at least one of the following: a first end (210) of the power cable (200), a second end (220) of the power cable (200), or an insulating material (232) surrounding electrically conductive material (230) of the power cable (200).

4. The system of claim 1, 2 or 3, wherein the identifier (250, 252) is located within an external device (400) to which the power cable (200) is connected.

5. The system of any one of claims 1 to 4, wherein the apparatus is configured to:
request from the host computer (10) the network identifier; and
receive from the host computer (10) the network identifier.

6. The system of claim 5, wherein the host computer (10) is configured to provide configuration data to the module (20, 22, 32, 34, 36), and the system is configured to configure the module (20, 22, 32, 34, 36) using the configuration data provided by the host computer (10).

7. The system of claim 6, wherein the configuration data are substantially identical to configuration data of a failed module (20, 22, 32, 34, 36) previously connected to the system.

8. The system of claim 5, 6 or 7, wherein the host computer (10) is configured to generate the network identifier using the information from the identifier (250, 252).

9. The system of any one of claims 1 to 8, wherein the machine (40) is selected from a group consisting of: a gas turbine; a steam turbine; a distributed control system; a distributed control device, and a network-controlled array of devices.

10. A power cable (200) for powering an apparatus, the power cable comprising:
an electrically conductive material between and connected to each of a first end and a second end thereof; and
an identifier (250, 252) connected to the electrically conductive material,
wherein the identifier (250, 252) is adapted to be read by the apparatus and information from the identifier used to generate a network identifier for the apparatus.

11. The power cable of claim 10, wherein the identifier (250, 252) includes at least one of the following: a read-only memory (ROM), an electrically-programmable read-only memory (EPROM), an electrically-erasable-programmable read-only memory (EEPROM), a non-volatile random access memory (NVRAM), a non-volatile memory device that, once programmed, retains identification information when disconnected or unpowered, a near field communication (NFC) device, or a radio frequency identification (RFID) tag.

12. The power cable of claim 10 or claim 11, wherein the identifier (250, 252) is located within at least one of the following: the first end (210), the second end (220), or an insulating material (232) surrounding the electrically conductive material.

13. The power cable of claim 10, 11 or 12, further comprising:
an external device (400) connected to the electrically conductive material, wherein the identifier (250, 252) is located within the external device (400).

14. A method of identifying an apparatus in a system for controlling a machine (40), the method comprising:
connecting the apparatus to a power cable (200);
connecting the power cable (200) to an electrical supply;
reading an identifier (250, 252) within the power cable (40); and
requesting from a host computer (10) a network identifier for the apparatus based on the identifier.

15. The method of claim 14, further comprising at least one of:
connecting the apparatus to a network to which the host computer (10) is connected;
receiving from the host computer (10) the network identifier for the apparatus;
configuring the apparatus using configuration data provided by the host computer (10), preferably including disconnecting from the power cable (200) a failed apparatus, wherein the configuration data are substantially identical to configuration data of the failed apparatus.

16. The method of claim 14 or claim 15, wherein the reading the identifier (250, 252) is performed automatically upon the apparatus being connected to the electrical supply.
